Europäisches Patentamt

European Patent Office

Office européen des brevets

(11) Veröffentlichungsnummer: **0 319 776**
**A2**

## (12) EUROPÄISCHE PATENTANMELDUNG

(21) Anmeldenummer: 88119468.2

(51) Int. Cl.4: **B32B 31/20**

(22) Anmeldetag: 23.11.88

(30) Priorität: 08.12.87 DE 3741573

(43) Veröffentlichungstag der Anmeldung:
14.06.89 Patentblatt 89/24

(84) Benannte Vertragsstaaten:
AT BE CH DE ES FR GB GR IT LI NL SE

(71) Anmelder: Louda, Günther
Dr.-Kurt-Huber-Strasse 10
D-8022 Grünwald(DE)

(72) Erfinder: Louda, Günther
Dr.-Kurt-Huber-Strasse 10
D-8022 Grünwald(DE)

(74) Vertreter: Lamprecht, Helmut, Dipl.-Ing.
Corneliusstrasse 42
D-8000 München 5(DE)

(54) Vorrichtung zum Laminieren von kartenförmigen Elementen.

(57) Eine Vorrichtung zum Laminieren von kartenförmigen Elementen, insbesondere Datenträgern, wie Ausweiskarten, besitzt eine Laminierstation, in der ein angetriebenes Walzenpaar (18, 20) dem Transport der Laminierfolie (22, 24) und dem Anpressen dieser Laminierfolie an die Elemente dient. Die Elemente werden durch eine mit dem Antrieb (38) des Walzenpaares (18, 20) synchronisierte Vorschubeinrichtung (26) mit den einzelnen Elementen zugeordneten Vorschuborganen (36) zwischen das Walzenpaar (18, 20) befördert.

## Vorrichtung zum Laminieren von kartenförmigen Elementen

Die Erfindung betrifft eine Vorrichtung zum Laminieren von kartenförmigen Elementen, insbesondere Datenträgern, wie Ausweiskarten, mit einer Laminierstation, in der ein angetriebenes Walzenpaar dem Transport der Laminierfolie und dem Anpressen der Laminierfolie an die Elemente dient, und mit einer Vorschubeinrichtung mit den einzelnen Elementen zugeordneten Vorschuborganen zum Einführen einzelner Elemente zwischen das Walzenpaar.

Bei der Herstellung von laminierten, kartenförmigen Elementen werden diese Elemente der Laminierstation zugeführt, wo sie zwischen mindestens einem Walzenpaar mit der Laminierfolie in Kontakt kommen und gemeinsam mit der Folie durch den Walzenspalt hindurchwandern, wobei durch den Anpreßdruck der Walzen nicht nur die Verbindung der Laminierfolie mit den Elementen herbeigeführt, sondern auch die Elemente ebenso wie die Laminierfolie mit der Umfangsgeschwindigkeit der Walzen durch den Walzenspalt gezogen werden. Für den Laminiervorgang ist es deshalb ohne Bedeutung, mit welcher Geschwindigkeit die Elemente an das Walzenpaar herangeführt werden, sofern nicht mehr Elemente angeliefert werden, als von der Folie aufgrund ihrer Transportgeschwindigkeit bewältigt werden können, oder mit welchem Abstand die Elemente an das Walzenpaar übergeben werden. Da die Elemente beispielsweise aus Druckbogen oder bedruckten Bändern ausgestanzt und dann einzeln der Laminierstation zugeführt werden, können sich aufgrund der vorangehenden Bearbeitungsstationen Unregelmäßigkeiten in der Anlieferung der Elemente zum Walzenpaar ergeben, ohne daß dadurch der Laminiervorgang beeinträchtigt wird.

Bei der Herstellung von fälschungssicheren Datenträgern werden gegebenenfalls Spezialmaterialien verwendet, welche es jederzeit gestatten, die Echtheit der Datenträger zu überprüfen, sofern nicht die Gefahr besteht, daß derartiges Spezialmaterial in unbefugte Hände gelangt. Es ist deshalb bei der Herstellung derartiger Datenträger erforderlich, die verbrauchten Materialmengen unter Kontrolle zu halten. Andererseits sind diese Spezialmaterialien verhältnismäßig teuer, so daß auch unter diesem Gesichtspunkt der Wunsch besteht, den Materialverbrauch möglichst gering zu halten.

Der Erfindung liegt die Aufgabe zugrunde, eine Vorrichtung der eingangs genannten Art so auszugestalten, daß auf einfache Weise der Materialverbrauch einerseits so gering wie möglich und andererseits jederzeit mengenmäßig unter Kontrolle gehalten werden kann.

Die Lösung dieser Aufgabe besteht darin, daß der Antrieb von Walzenpaar und Vorschubeinrichtung synchronisiert ist.

Dadurch wird erreicht, daß das Walzenpaar für jedes zu laminierende Element einen genau bekannten Winkel durchläuft und somit eine genau bekannte Länge der Laminierfolie von der Vorratsrolle abzieht. Es kann somit einerseits die je Element verbrauchte Laminierfolie auf die tatsächlich benötigte Länge eingestellt werden, und andererseits kann anhand der Stückzahl der laminierten Datenträger festgestellt werden, welche Länge der Laminierfolie zu deren Herstellung verbraucht worden sein darf. Übersteigt der tatsächliche Verbrauch diese berechnete Menge, so ergibt sich daraus, daß unbefugt Material entnommen worden ist.

Eine zweckmäßige Ausgestaltung besteht darin, daß dem Walzenpaar und der Vorschubeinrichtung ein gemeinsamer Antrieb zugeordnet ist, und beide im Zwanglauf miteinander verbunden sind.

Eine weitere zweckmäßige Ausführungsform besteht darin, daß die Vorschubeinrichtung hin- und hergehend bewegliche, in Vorschubrichtung in eine zwischen das Walzenpaar führende Führungsbahn für die Elemente anhebbare Greifer umfaßt, die über einen Kurbeltrieb mit dem Walzenpaar verbunden sind.

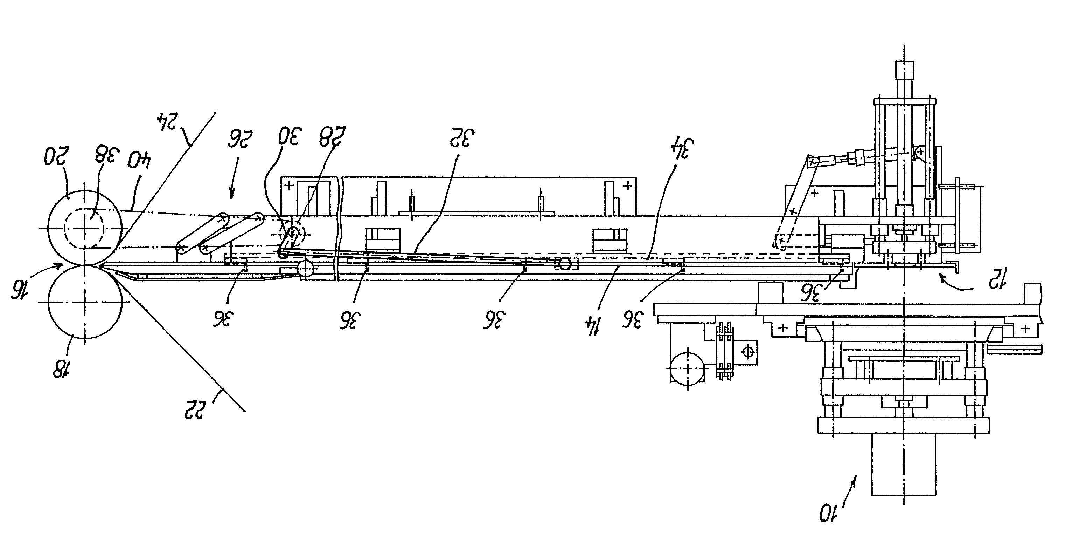

Anhand der nun folgenden Beschreibung eines in der Zeichnung dargestellten Ausführungsbeispiels der Erfindung wird diese näher erläutert.

- Die Fig. zeigt einen Ausschnitt aus einer Anlage zur Herstellung von laminierten Ausweiskarten mit dem Ausgang der Stanzstation und dem Eingang der Laminierstation.

In der Zeichnung verläuft die Arbeitsrichtung von links nach rechts. Am linken Zeichnungsrand ist eine Stanze 10 gezeigt, welche die Datenträger aus einem mehrere Datenträgerabdrucke aufweisenden Material ausstanzt und die ausgestanzten Datenträger auf einer Ablage 12 ablegt, von wo aus sie über eine Führungsbahn 14 einzeln in den Spalt 16 zwischen zwei unter Druck aneinander anliegenden, beheizten Laminierwalzen 18 und 20 befördert werden.

Von zwei nicht gezeigten Vorratstrommeln wird jeweils eine Bahn eine Laminierfolie 22 bzw. 24 abgezogen und in Arbeitsrichtung in den Spalt zwischen den Walzen 18 und 20 gezogen, wobei sich die Laminierfolien 22 und 24 an den Umfang der Walzen 18 bzw. 20 anlegen, so daß die Datenträger zwischen die beiden Laminierfolien 22 und 24 gelangen und durch den Druck der Walzen 18 und 20 und die Wärmeeinwirkung fest mit der Folie verbunden werden. Diese feste Verbindung wird durch weitere, auf das Walzenpaar 18 und 20 folgende Einrichtungen verbessert, welche für die vorliegende Erfindung ohne Bedeutung und deshalb nicht dargestellt sind.

Um die Datenträger von der Ablage 12 zwischen die Walzen 18 und 20 zu befördern, ist eine Vorschubeinrichtung 26 vorgesehen, die einen Kurbeltrieb 28 umfaßt, der über eine mit der Kurbel 30 verbundene Schubstange 32 einen Schieber 34 unterhalb der Führungsbahn 14 in Vorschubrichtung und zurück bewegt. Der Schieber 34 ist mit Greifern 36 versehen, die bei der Bewegung in Vorschubrichtung in den Bereich der Führungsbahn 14 ragen und durch einen Steuermechanismus bei der Bewegung in Gegenrichtung unter die Führungsbahn 14 bewegt sind. Bei der gezeigten Anordnung sind sechs Bewegungen des Schiebers 34 erforderlich, um einen Datenträger aus dem Bereich der Ablage 12 zwischen die Walzenpaare 18 und 20 zu befördern, so daß der Schieber mit sechs Greifern 36 versehen ist, die den Datenträger jeweils um einen Schritt weiterbewegen.

Die Walzen 18 und 20 werden durch einen Motor 38 angetrieben, der über eine schlupffreie Verbindung 40 zugleich auch den Kurbeltrieb 28 antreibt, wobei durch ein geeignetes Übersetzungsverhältnis zwischen den Walzen 18 und 20 einerseits und dem Kurbeltrieb 28 andererseits jeweils nach einem vorbestimmten Drehwinkel der Walzen 18 und 20 ein Datenträger zwischen die Walzen 18 und 20 eingeführt wird. Das Übersetzungsverhältnis ist dabei so gewählt, daß die Datenträger so dicht wie möglich aufeinanderfolgen, und der Verbrauch an Laminierfolie dadurch so gering wie möglich gehalten wird. Da jedem Datenträger eine vorgegebene Länge der Laminierfolie zugeordnet ist, kann anhand der laminierten Datenträger genau ermittelt werden, wie hoch der tatsächliche Verbrauch an Laminierfolie gewesen ist. Überschreitet der tatsächliche Verbrauch diesen ermittelten Wert, ist dies ein Anzeichen für eine unbefugte Entnahme von Folienmaterial.

## Ansprüche

1. Vorrichtung zum Laminieren von kartenförmigen Elementen, insbesondere Datenträgern, wie Ausweiskarten, mit einer Laminierstation, in der ein angetriebenes Walzenpaar (18, 20) dem Transport der Laminierfolie (22, 24) an die Elemente dient, und mit einer Vorschubeinrichtung (26) mit den einzelnen Elementen zugeordneten Vorschuborganen (36) zum Einführen einzelner Elemente zwischen das Walzenpaar, *dadurch gekennzeichnet,* daß der Antrieb (38, 40, 28) von Walzenpaar (18, 20) und Vorschubeinrichtung (26) synchronisiert ist.

2. Vorrichtung nach Anspruch 1, *dadurch gekenn-zeichnet,* daß dem Walzenpaar (18, 20) und der Vorschubeinrichtung (26) ein gemeinsamer Antrieb (38) zugeordnet ist, und beide in Zwanglauf miteinander verbunden sind.

3. Vorrichtung nach Anspruch 2, *dadurch gekenn-zeichnet,* daß die Vorschubeinrichtung (26) hin- und hergehend bewegliche, in Vorschubrichtung in eine zwischen das Walzenpaar (18, 20) führende Führungsbahn (14) für die Elemente anhebbare Greifer (36) umfaßt, die über einen Kurbeltrieb (28) mit dem Walzenpaar (18, 20) verbunden sind.